# EUROPÄISCHE PATENTSCHRIFT

(11) **EP 3 815 205 B1**
(45) Veröffentlichungstag und Bekanntmachung des Hinweises auf die Patenterteilung: **02.09.2026**
(21) Anmeldenummer: 19753070.2
(22) Anmeldetag: 12.08.2019
(51) Int. Cl.: H02G 1/00, H02G 3/00, H02G 3/12

(54) **MONTAGEHILFE**
ASSEMBLY AID
AIDE AU MONTAGE

(30) Priorität: 13.09.2018 DE 102018122442
(43) Veröffentlichungstag der Anmeldung: 05.05.2021
(73) Patentinhaber: Schneider Electric Industries SAS, 92500 Rueil-Malmaison (FR)
(72) Erfinder: LICHTINGHAGEN, Andrea, 51674 Wiehl (DE); NILSSON, Mattias, 26654 Vejbystrand (SE); NARAYANAN, Shreenath, 51674 Wiehl (DE); MATHULLA, Alex, 51674 Wiehl (DE)
(74) Vertreter: Manitz Finsterwald Patent- und Rechtsanwaltspartnerschaft mbB
(86) Internationale Anmeldenummer: PCT/EP2019/071613
(87) Internationale Veröffentlichungsnummer: WO 2020/052882

(56) Entgegenhaltungen:
- EP-A2- 2 852 017
- CA-A1- 2 817 911
- US-A- 4 888 880
- US-A- 6 003 234
- US-B1- 6 631 564

## Beschreibung

Die vorliegende Erfindung betrifft eine Montagehilfe zur lagerichtigen Montage von mindestens zwei unterschiedlich ausgebildeten elektrischen Installationsgeräten, umfassend einen Grundkörper, eine Neigungswinkelanzeige und mindestens zwei verschiedene Kopplungsmittel, welche jeweils dazu ausgebildet sind, die Montagehilfe mit einem der mindestens zwei elektrischen Installationsgeräte zu koppeln.

Eine Montagehilfe mit den Merkmalen des Oberbegriffs des unabhängigen Anspruchs 1 ist aus der US 6,631,564 B1 bekannt. Eine weitere Montagehilfe ist in der US 6 003 234 A offenbart.

Montagehilfen dienen üblicherweise dazu, ein in oder an einer Wand zu montierendes elektrisches Installationsgerät, wie zum Beispiel eine aus der EP 2 852 017 A2 bekannte Installationsdose, eine Steckdose, einen Schalter, eine Geräte-Verbindungsdose oder dergleichen, für ein ansprechendes Erscheinungsbild des elektrischen Installationsgeräts bezüglich der Horizontalen bzw. Vertikalen waagerecht auszurichten. Hierfür umfasst die Montagehilfe sowohl ein Kopplungsmittel zur Kopplung der Montagehilfe mit dem elektrischen Installationsgerät als auch eine Neigungswinkelanzeige, welche einen Neigungswinkel in einer Ebene parallel zur Wand des mit der Montagehilfe gekoppelten elektrischen Installationsgeräts anzeigt. Durch Verstellen eines an dem elektrischen Installationsgerät vorgesehenen Justagemittels, welches beispielsweise in Form einer Schraube ausgebildet sein kann, lässt sich das elektrische Installationsgerät mit Hilfe der Montagehilfe unter Verwendung der Neigungswinkelanzeige optimal ausrichten.

Es ist die Aufgabe der Erfindung, eine kompakte Montagehilfe der eingangs genannten Art zu schaffen, die universell einsetzbar ist.

Die Aufgabe wird durch eine Montagehilfe mit den Merkmalen der unabhängigen Ansprüche gelöst.

Gemäß Anspruch 1 betrifft die Erfindung eine Montagehilfe zur lagerichtigen Montage von mindestens zwei unterschiedlich ausgebildeten elektrischen Installationsgeräten, umfassend einen Grundkörper, eine Neigungswinkelanzeige und mindestens zwei verschiedene Kopplungsmittel, welche jeweils dazu ausgebildet sind, die Montagehilfe mit einem der mindestens zwei elektrischen Installationsgeräte zu koppeln, wobei mindestens ein Kopplungsmittel an einem bezüglich des Grundkörpers zwischen einer eingeklappten Stellung und einer ausgeklappten Stellung um eine Schwenkachse verschwenkbaren Schwenkkörper ausgebildet ist.

Der Erfindung liegt der allgemeine Gedanke zugrunde, dass eine Montagehilfe mit mindestens zwei unterschiedlichen Kopplungsmitteln einen kompakteren Aufbau aufweist, wenn sich von den unterschiedlichen Kopplungsmitteln mindestens ein Kopplungsmittel platzsparend einklappen lässt. Zu diesem Zweck ist mindestens ein Kopplungsmittel an einem zwischen einer ausgeklappten Stellung und einer eingeklappten Stellung verschwenkbaren Schwenkkörper ausgebildet, wobei das ausgeklappte Kopplungsmittel mit einem entsprechenden passenden elektrischen Installationsgerät gekoppelt werden kann.

Da die Montagehilfe in der eingeklappten Stellung des Schwenkkörpers weniger Raum beansprucht als in dessen ausgeklappten Stellung, besteht ein Vorteil der Erfindung darin, dass sich die Montagehilfe platzsparend transportieren und aufbewahren lässt. Gleichzeitig bietet die erfindungsgemäße Montagehilfe den Vorteil, dass durch mindestens zwei verschiedene Kopplungsmittel mindestens zwei unterschiedliche elektrische Installationsgeräte mit derselben Montagehilfe ausgerichtet werden können.

Vorteilhafte Ausbildungen der Erfindung sind den Unteransprüchen, der Beschreibung und den Zeichnungen zu entnehmen.

Ein besonders kompakter Aufbau der Montagehilfe lässt sich dadurch erreichen, dass sich der Schwenkkörper in seiner eingeklappten Stellung in einer, insbesondere mittig, durch den Grundkörper verlaufenden Erstreckungsebene erstreckt. Wird das an dem Schwenkkörper ausgebildete Kopplungsmittel zur Kopplung der Montagehilfe mit einem entsprechenden elektrischen Installationsgerät benötigt, kann der Schwenkkörper in seiner ausgeklappten Stellung zumindest annähernd rechtwinklig zur Erstreckungsebene des Grundkörpers ausgerichtet sein. Die Erstreckungsebene des Grundkörpers ist dabei im gekoppelten Zustand der Montagehilfe, d.h. wenn die Montagehilfe mit einem in oder an einer Wand zu montierenden elektrischen Installationsgerät mittels eines Kopplungsmittels gekoppelt ist, zumindest annähernd parallel zur Wand ausgerichtet.

Nach einer vorteilhaften Ausführungsform der Montagehilfe können zwei Kopplungsmittel jeweils an gegenüberliegenden Endabschnitten des Schwenkkörpers ausgebildet sein, so dass sich die Kopplungsmittel in der ausgeklappten Stellung des Schwenkkörpers auf gegenüberliegenden Seiten der durch den Grundkörper verlaufenden Erstreckungsebene befinden bzw. von dieser wegerstrecken. Es versteht sich, dass sich die Schwenkachse zwischen den beiden Kopplungsmitteln befindet. Insbesondere kann die Schwenkachse in der Erstreckungsebene des Grundkörpers liegen.

Damit der Schwenkkörper in der eingeklappten Stellung sicher von dem Grundkörper aufgenommen ist, kann der Grundkörper mindestens eine Aufnahme aufweisen, welche in der eingeklappten Stellung des Schwenkkörpers mindestens ein an dem Schwenkkörper ausgebildetes Kopplungsmittel form- und/oder kraftschlüssig aufnimmt. Somit kann sich der Schwenkkörper insbesondere beim Transport nicht selbstständig ausklappen.

Gemäß einer erfindungsgemäßen weiteren Ausgestaltung umfasst die Montagehilfe nicht nur mindestens zwei unterschiedlich ausgebildete Kopplungsmittel sondern mindestens drei unterschiedlich ausgebildete Kopplungsmittel, welche jeweils dazu ausgebildet sind, die Montagehilfe mit einem der mindestens drei elektrischen Installationsgeräte zu koppeln. Dabei können mindestens zwei Kopplungsmittel an dem Grundkörper und mindestens ein Kopplungsmittel an dem Schwenkkörper ausgebildet sein. Es ist aber auch möglich, dass mindestens zwei Kopplungsmittel an dem Schwenkkörper und mindestens ein Kopplungsmittel an dem Grundkörper ausgebildet sind. Grundsätzlich ist aber auch eine Variante denkbar, bei welcher die mindestens drei unterschiedlichen Kopplungsmittel an dem Grundkörper, insbesondere feststehend an dem Grundkörper, ausgebildet sind. Ein Schwenkkörper kann dann entbehrlich sein.

Die Montagehilfe gemäß der erfindungsgemäßen weiteren Ausgestaltung umfasst ferner ein an dem Grundkörper ausgebildetes und mittig zu dem Grundkörper angeordnetes Drehmittel, welches in Form eines Knaufs zum händischen Verdrehen der Montagehilfe oder für ein Werkzeug ausgebildet ist und welches eine Drehachse definiert, um welche die Montagehilfe drehbar ist, wobei die Drehachse zumindest annähernd rechtwinklig zu der durch den Grundkörper verlaufenden Erstreckungsebene ausgerichtet ist.

Damit die Montagehilfe mit einem elektrischen Installationsgerät in Form einer Steckdose gekoppelten werden kann, bildet ein Kopplungsmittel vorzugsweise zumindest Teile eines Steckers nach. Beispielsweise kann das Kopplungsmittel zwei Steckerstifte eines Steckers umfassen. Da weltweit verschiedene Steckdosen bzw. Steckertypen existieren, versteht es sich, dass das Kopplungsmittel einen Stecker für die jeweils regionaltypische Ausgestaltung der Steckdose nachbildet.

Die Montagehilfe kann ferner dazu verwendet werden, ein elektrisches Installationsgerät in Form eines Schalters bzw. eines Schaltereinsatzes auszurichten. Hierfür kann die Montagehilfe ein Kopplungsmittel aufweisen, welche die Montagehilfe mit einem Schaltereinsatz koppelt. Vorzugsweise bildet das Kopplungsmittel zu diesem Zweck einen Halteclips einer Schalterblende nach.

Überdies kann die Montagehilfe dazu verwendet werden, eine verdrehbare Geräte-Verbindungsdose oder einen verdrehbaren Ringeinsatz der Geräte-Verbindungsdose auszurichten. Zu diesem Zweck kann vorteilhafterweise an dem Grundkörper ein Kopplungsmittel ausgebildet sein, welches dazu dient, die Montagehilfe mit der verdrehbaren Geräte-Verbindungsdose oder dem verdrehbaren Ringeinsatz der Geräte-Verbindungsdose zu koppeln. Dieses Kopplungsmittel kann durch zwei an dem Grundkörper diametral gegenüberliegend angeordnete Aussparungen gebildet sein, welche dazu dienen, im gekoppelten Zustand der Montagehilfe jeweils ein Befestigungsmittel zur Befestigung der Geräte-Verbindungsdose oder des Ringeinsatzes der Geräte-Verbindungsdose aufzunehmen. Das Befestigungsmittel kann eine Schraube sein, wobei zum Ausrichten der Geräte-Verbindungsdose bzw. des Ringeinsatzes vorzugsweise ein Kopf der Schraube in jeweils in einer der an dem Grundkörper ausgebildeten Aussparungen aufgenommen ist. Dabei ist es nicht zwingend erforderlich, die Montagehilfe an der Geräte-Verbindungsdose bzw. dem Ringeinsatz festzuschrauben, vielmehr kann die Montagehilfe auf die Geräte-Verbindungsdose bzw. den Ringeinsatz aufgesteckt werden.

Das mit der Montagehilfe gekoppelte und zu montierende elektrische Installationsgerät kann durch Verdrehen der Montagehilfe in einer Ebene parallel zur Wand ausgerichtet werden. Es ist daher von Vorteil, wenn die Montagehilfe zu ihrer Verdrehung ein mittig zu dem Grundkörper angeordnetes Drehmittel aufweist, welches eine Drehachse definiert, um welche die Montagehilfe drehbar ist. Ist die Montagehilfe mit dem in der Wand eingelassenen elektrischen Installationsgerät gekoppelt, so ist die Drehachse des Drehmittels zumindest annähernd senkrecht zur Wand ausgerichtet.

Wie bereits erwähnt, ist das Drehmittel erfindungsgemäß ein Knauf zum händischen Verdrehen der Montagehilfe. Gemäß einer anderen vorteilhaften erfindungsgemäßen Ausgestaltung ist das Drehmittel für ein Werkzeug ausgebildet, wodurch sich die Verdrehung der Montagehilfe erleichtert.

Vorzugsweise dient das Drehmittel dazu, die mit der Montagehilfe gekoppelte Geräte-Verbindungsdose bzw. den Ringeinsatz der Geräte-Verbindungsdose zu verdrehen, wobei die Drehachse des Drehmittels und eine Drehachse der Geräte-Verbindungsdose bzw. des Ringeinsatzes vorteilhafterweise koaxial zueinander ausgerichtet sind.

Gemäß einer besonders kompakten Ausführungsform der Montagehilfe kann das Drehmittel an dem Schwenkkörper ausgebildet und die Drehachse in der eingeklappten Stellung des Schwenkkörpers zumindest annähernd rechtwinklig zu der durch den Grundkörper verlaufenden Erstreckungsebene ausgerichtet sein.

Für eine besonders sichere Kopplung der Montagehilfe mit der Geräte-Verbindungsdose bzw. mit dem Ringeinsatz der Geräte-Verbindungsdose kann der Grundkörper zwei Stützabschnitte aufweisen, welche im gekoppelten Zustand der Montagehilfe zur Anlage an einer Innenfläche der Geräte-Verbindungsdose oder des Ringeinsatzes dienen. Hierdurch wird verhindert, dass die gekoppelte Montagehilfe während der Ausrichtung und/oder Fixierung der Geräte-Verbindungsdose bzw. des Ringeinsatzes verkippen kann.

Bevorzugt ist mindestens ein Stützabschnitt als Kreisbogenabschnitt ausgebildet. Überdies ist es von Vorteil, wenn die Stützabschnitte in Bezug auf die Drehachse des Drehmittels sowie auf die an dem Grundkörper ausgebildeten Aussparungen radial nach innen versetzt sind.

Eine einfache und kostengünstige Gestaltung der Montagehilfe lässt sich dadurch erreichen, dass die Neigungswinkelanzeige an dem Grundkörper festgeclipst ist. Vorzugsweise ist die Neigungswinkelanzeige an einem in der Erstreckungsebene liegenden Endabschnitt des Grundkörpers festgeclipst. Hierdurch ist es möglich, dass die Neigungswinkelanzeige während der Montage des elektrischen Installationsgerätes sowohl von der Seite als auch von schräg oben sowie gänzlich von oben optimal erkennbar ist. Eine derart gute Erkennbarkeit der Neigungswinkelanzeige ist insofern von Vorteil, als dass elektrische Installationsgeräte üblicherweise unterhalb des normalen Blickfeldes einer Person an einer Wand angebracht sind.

Die Montagehilfe lässt sich außerdem besonders kostengünstig gestalten, wenn die Neigungswinkelanzeige eine Wasserwaage bzw. eine sogenannte Libelle ist. Es ist aber auch denkbar, dass die Neigungswinkelanzeige ein Senklot oder ein mit einer Skala versehenes Inklinometer ist. Insbesondere kann das Inklinometer elektrisch betrieben sein bzw. eine elektronische Anzeige aufweisen.

Vorzugsweise dient die Neigungswinkelanzeige dazu, das elektrische Installationsgerät bezüglich der Horizontalen auszurichten. Zur bedarfsweisen Ausrichtung des elektrischen Installationsgeräts bezüglich der Vertikalen kann die Montagehilfe zusätzlich mindestens eine weitere Neigungswinkelanzeige aufweisen, welche in einer Ebene parallel zur Erstreckungsebene des Grundkörpers zumindest annähernd rechtwinklig zur Neigungswinkelanzeige zur horizontalen Ausrichtung des elektrischen Installationsgeräts ausgerichtet ist.

Es versteht sich, dass ein Kopplungsmittel nicht nur teilweise einen Stecker oder einen Halteclips einer Schalterblende nachbilden kann, sondern auch derart ausgebildet sein kann, dass das Kopplungsmittel mit einem anderen elektrischen Installationsgerät koppelbar ist. Beispielsweise kann das Kopplungsmittel bei entsprechender Ausgestaltung auch mit einem Telekommunikationsanschluss, wie z.B. einem Telefon- oder Netzwerkanschluss, einem Antennenanschluss, einem Dimmer, einem Thermostaten oder dergleichen koppelbar sein.

Überdies kann die Montagehilfe derart ausgestaltet sein, dass zumindest ein Kopplungsmittel reversibel lösbar mit der Montagehilfe verbindbar ist, z.B. mittels einer Steck- oder Clipsverbindung, wodurch ein Kopplungsmittel gegen ein anderes Kopplungsmittel ausgetauscht werden kann. Hierdurch ist es möglich, dass ein für ein bestimmtes elektrisches Installationsgerät geeignetes Kopplungsmittel aus einer Vielzahl unterschiedlicher Kopplungsmittel ausgewählt und bei Bedarf mit der Montagehilfe verbunden werden kann.

Es sollte außerdem zu verstehen sein, dass das Montagemittel im Wesentlichen aus einem elektrisch isolierenden Material, insbesondere einem Kunststoffmaterial, besteht. Vorzugsweise sind der Grundkörper und/oder der Schwenkkörper mittels eines Spritzgussverfahrens hergestellt.

Gleichwohl die Erfindung im Zusammenhang mit elektrischen Unterputzinstallationsgeräten beschrieben wird, kann die erfindungsgemäße Montagehilfe auch für elektrische Aufputzinstallationsgeräte verwendet werden.

Nachfolgend wird die Erfindung rein beispielhaft anhand einer möglichen Ausführungsform unter Bezugnahme auf die beigefügten Zeichnungen beschrieben. Es zeigen:
- Fig. 1: eine perspektivische Ansicht einer Montagehilfe mit einer Neigungswinkelanzeige, einem Grundkörper und einem eingeklappten Schwenkkörper;
- Fig. 2: eine weitere perspektivische Ansicht der Montagehilfe von Fig. 1 mit ausgeklapptem Schwenkkörper;
- Fig. 3: eine Frontansicht der Montagehilfe von Fig. 1;
- Fig. 4: eine Seitenansicht der Montagehilfe von Fig. 1;
- Fig. 5: die Montagehilfe von Fig. 1 in einem gekoppelten Zustand mit einem Ringeinsatz einer Geräte-Verbindungsdose, und
- Fig.6: eine Längsschnittansicht der Montagehilfe von Fig. 5.

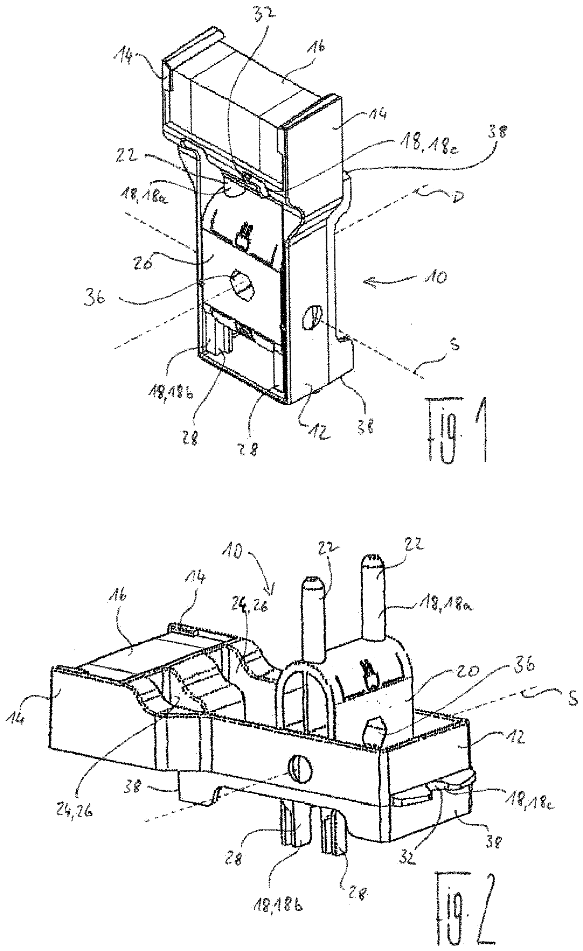

Die Fig. 1 bis 6 zeigen jeweils eine Montagehilfe 10 zur lagerichtigen Montage von mindestens zwei unterschiedlich ausgebildeten elektrischen Installationsgeräten. Die Montagehilfe 10 umfasst einen Grundkörper 12 sowie eine an dem Grundkörper 12 mittels Clipselementen 14 an dem Grundkörper 12 festgeclipste Neigungswinkelanzeige 16. Die Neigungswinkelanzeige 16 ist in dem dargestellten Ausführungsbeispiel in Form einer Wasserwaage ausgebildet.

Die Montagehilfe 10 umfasst außerdem mindestens zwei verschiedene Kopplungsmittel 18, welche jeweils dazu ausgebildet sind, die Montagehilfe 10 mit einem der mindestens zwei elektrischen Installationsgeräte zu koppeln. In dem dargestellten Ausführungsbeispiel weist die Montagehilfe 10 konkret drei verschiedene Kopplungsmittel 18 auf, welche nachfolgend noch genauer beschrieben werden.

Zwei der drei Kopplungsmittel 18 sind an einem bezüglich des Grundkörpers 12 zwischen einer eingeklappten Stellung (Fig. 1, 3, 4, 5 und 6) und einer ausgeklappten Stellung (Fig. 2) um eine Schwenkachse S verschwenkbaren Schwenkkörper 20 ausgebildet. Genauer gesagt ist jeweils ein Kopplungsmittel 18 an einem Endabschnitt von zwei gegenüberliegenden Endabschnitten des Schwenkkörpers 20 ausgebildet.

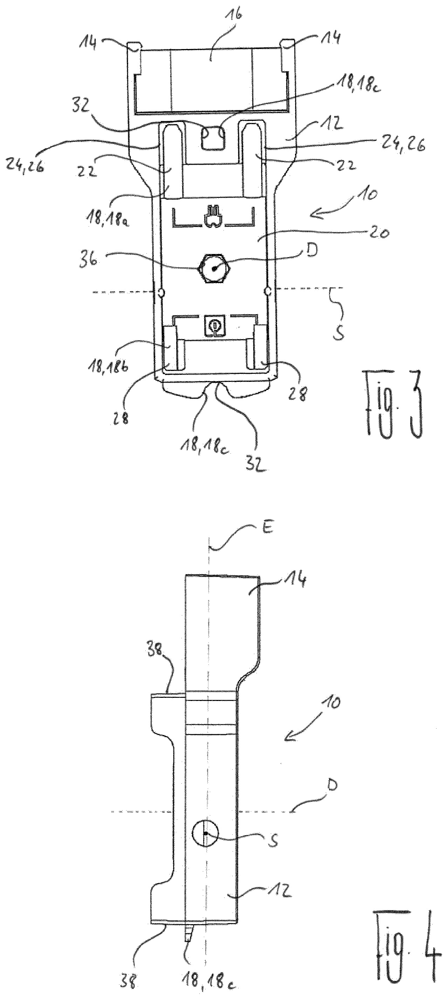

In der eingeklappten Stellung des Schwenkkörpers 20 erstreckt sich dieser in einer durch den Grundkörper 12 verlaufenden Erstreckungsebene E, welche in Fig. 3 parallel und in Fig. 4 rechtwinklig zur Zeichenebene ausgerichtet ist. In seiner ausgeklappten Stellung ist der Schwenkkörper 20 zumindest annähernd rechtwinklig zur Erstreckungsebene E des Grundkörpers 12 ausgerichtet, so dass sich die Endabschnitte des Schwenkkörpers 20 bzw. die daran ausgebildeten Kopplungsmittel 18 auf gegenüberliegenden Seiten der Erstreckungsebene E des Grundkörpers 12 von dieser wegerstrecken.

Ein an einem Endabschnitt des Schwenkkörpers 20 ausgebildetes erstes Kopplungsmittel 18a der Montagehilfe 10 bildet zumindest Teile eines Steckers nach und ist dazu ausgebildet, die Montagehilfe 10 mit einer in den Figuren nicht dargestellten Steckdose zu koppeln. Hierfür weist das erste Kopplungsmittel 18a zwei Steckerstifte 22 auf, welche zur Kopplung der Montagehilfe 10 mit der Steckdose in die Steckdose gesteckt werden.

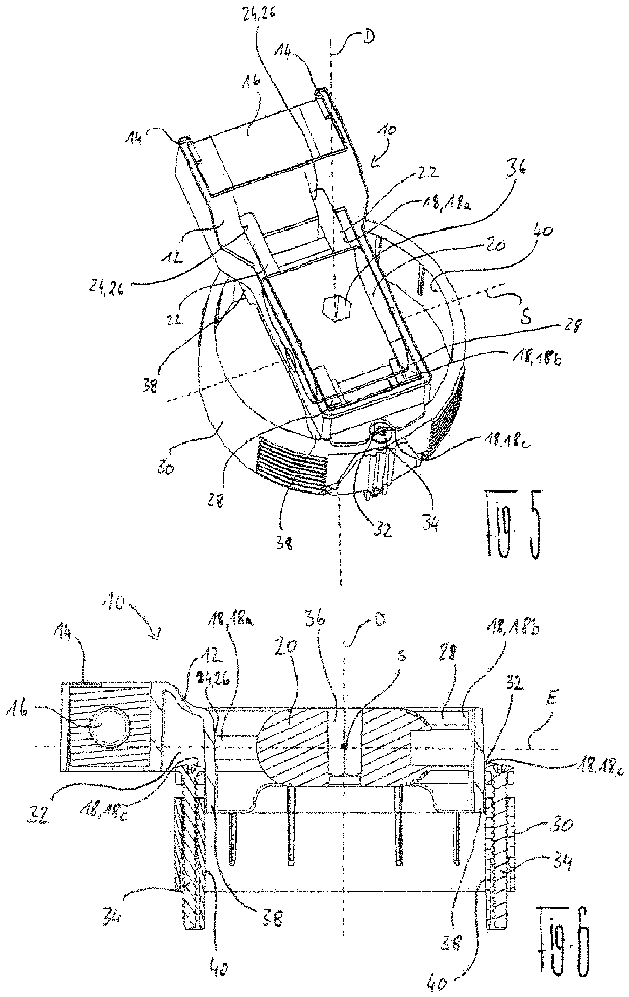

Wie besonders anhand von Fig. 3 und 5 ersichtlich ist, sind die beiden Steckerstifte 22 des ersten Kopplungsmittels 18a in der eingeklappten Stellung des Schwenkkörpers 20 jeweils form- und/oder kraftschlüssig in Taschen 24 einer an dem Grundkörper 12 ausgebildeten Aufnahme 26 aufgenommen. Indem das erste Kopplungsmittel 18a in der eingeklappten Stellung des Schwenkkörpers 20 in der Aufnahme 26 des Grundkörpers 12 form- und/oder kraftschlüssig aufgenommen ist, wird verhindert, dass sich der eingeklappte Schwenkkörper 20 selbstständig ausklappen kann.

Ein ebenfalls an dem Schwenkkörper 20, jedoch an einem gegenüberliegenden Endabschnitt, ausgebildetes zweites Kopplungsmittel 18b der Montagehilfe 10 ist dazu ausgebildet, die Montagehilfe 10 mit einem in den Figuren nicht dargestellten Schalter bzw. einem Schaltereinsatz zu koppeln und bildet hierfür mindestens einen Halteclips 28 einer Schalterblende aus. In dem dargestellten Ausführungsbeispiel weist das zweite Kopplungsmittel 18b konkret vier Halteclipse 28 auf. Es versteht sich, dass der Grundkörper 12 zusätzlich oder alternativ auch eine Aufnahme für das zweite Kopplungsmittel 18b aufweisen kann, welche das zweite Kopplungsmittel 18b form- und/oder kraftschlüssig aufnimmt.

Ein drittes Kopplungsmittel 18c ist an dem Grundkörper 12 ausgebildet und dient dazu die Montagehilfe 10 mit einer verdrehbaren Geräte-Verbindungsdose oder, wie in Fig. 5 und 6 dargestellt, mit einem verdrehbaren Ringeinsatz 30 einer in Fig. 5 und 6 nicht gezeigten Geräte-Verbindungsdose zu koppeln. Das dritte Kopplungsmittel 18c ist durch zwei an dem Grundkörper 12 diametral gegenüberliegende Aussparungen 32 gebildet (Fig. 3 und 6), welche im gekoppelten Zustand der Montagehilfe 10 jeweils ein Befestigungsmittel 34 zur Befestigung der Geräte-Verbindungsdose oder des Ringeinsatzes 30 der Geräte-Verbindungsdose aufnehmen (Fig. 5 und 6).

Zur Verdrehung der mit dem Ringeinsatz 30 mittels des dritten Kopplungsmittels 18c gekoppelten Montagehilfe 10 ist ein mittig zu dem Grundkörper 12 angeordnetes Drehmittel 36 an der Montagehilfe 10 vorgesehen, welches eine Drehachse D definiert, um welche die Montagehilfe 10 drehbar ist. Es versteht sich, dass die Drehachse D des Drehmittels 36 und eine Drehachse des Ringeinsatzes 30 oder der Geräte-Verbindungsdose koaxial zueinander ausgerichtet sind, wenn die Montagehilfe 10 mit dem Ringeinsatz 30 bzw. der Geräte-Verbindungsdose gekoppelt ist.

In dem dargestellten Ausführungsbeispiel ist das Drehmittel 36 an dem Schwenkkörper 20 in Form eines sich in den Schwenkkörper 20 hineinerstreckender Innensechskants ausgebildet und die Drehachse D des Drehmittels 36 ist in der eingeklappten Stellung des Schwenkkörpers 20 zumindest annähernd rechtwinklig zu der durch den Grundkörper 12 verlaufenden Erstreckungsebene E ausgerichtet. Grundsätzlich kann das Drehmittel 36 aber nicht nur an dem Schwenkkörper 20, sondern auch an dem Grundkörper 12 ausgebildet sein, wobei die Drehachse D des Drehmittels 36 vorzugsweise zumindest annähernd rechtwinklig zur durch den Grundkörper 12 verlaufenden Erstreckungsebene E ausgerichtet ist.

Wie bereits erwähnt, ist das Drehmittel 36 in Form eines Innensechskants ausgebildet. Hierdurch kann die Montagehilfe 10 zu ihrer Verdrehung mittels des Drehmittels 36 mit einem in den Figuren nicht dargestellten Außensechskantwerkzeug verbunden werden. Es versteht sich, dass das Drehmittel 36 auch eine andere Form aufweisen kann. Beispielsweise kann das Drehmittel 36 die Form eines Innenvierkants oder eines Schlitzes aufweisen. Das Drehmittel 36 kann aber auch ein sich von dem Schwenkkörper 20 bzw. von dem Grundkörper 12 wegerstreckender Außenmehrkant, insbesondere Außensechskant, sein. Auch ist es denkbar, dass das Drehmittel 36 ein Knauf sein kann, so dass sich die Montagehilfe 10 manuell, d.h. ohne Werkzeug, verdrehen lässt.

Wie besonders anhand von Fig. 1 und 6 zu erkennen ist, ist das Drehmittel 36 in der eingeklappten Stellung des Schwenkkörpers 20 im Wesentlichen auf einer Seite der durch den Grundkörper 12 verlaufenden Erstreckungsebene E ausgebildet, wohingegen sich auf der anderen Seite der Erstreckungsebene E zwei Stützabschnitte 38 von dem Grundkörper 12 wegerstrecken. Anhand von Fig. 5 und 6 ist zu erkennen, dass die beiden Stützabschnitte 38 im gekoppelten Zustand der Montagehilfe 10 mit dem Ringeinsatz 30 oder der Geräte-Verbindungsdose an einer Innenfläche 40 des Ringeinsatzes 30 oder der Geräte-Verbindungsdose anliegen. Hierdurch unterstützen die beiden Stützabschnitte 38 eine besonders sichere Kopplung der Montagehilfe 10 mit dem Ringeinsatz 30 oder der Geräte-Verbindungsdose.

Nachfolgend wird kurz die Funktionsweise der Montagehilfe 10 erläutert. Zunächst wird die Montagehilfe 10 mit einem elektrischen Installationsgerät mittels eines passenden Kopplungsmittels 18 durch Einstecken, Aufstecken, Einclipsen und/oder Verschrauben gekoppelt. Dazu kann es gegebenenfalls erforderlich sein, den eingeklappten Schwenkkörper 20 auszuklappen. Im gekoppelten Zustand der Montagehilfe 10 kann das elektrische Installationsgerät mittels der Neigungswinkelanzeige 16 korrekt ausgerichtet und anschließend an der Wand fixiert werden. Nach der korrekten Ausrichtung und Fixierung des elektrischen Installationsgeräts wird die Montagehilfe 10 wieder entkoppelt.

### Bezugszeichenliste

- 10: Montagehilfe
- 12: Grundkörper
- 14: Clipselemente
- 16: Neigungswinkelanzeige
- 18: Kopplungsmittel
- 18a: erstes Kopplungsmittel
- 18b: zweites Kopplungsmittel
- 18c: drittes Kopplungsmittel
- 20: Schwenkkörper
- 22: Steckerstift
- 24: Tasche
- 26: Aufnahme
- 28: Halteclips
- 30: Ringeinsatz
- 32: Aussparung
- 34: Befestigungsmittel
- 36: Drehmittel
- 38: Stützabschnitt
- 40: Innenfläche

- E: Erstreckungsebene
- D: Drehachse
- S: Schwenkachse

## Patentansprüche

1. Montagehilfe (10) zur lagerichtigen Montage von mindestens zwei unterschiedlich ausgebildeten elektrischen Installationsgeräten, umfassend einen Grundkörper (12), eine Neigungswinkelanzeige (16) und mindestens zwei verschiedene Kopplungsmittel (18), welche jeweils dazu ausgebildet sind, die Montagehilfe (10) mit einem der mindestens zwei elektrischen Installationsgeräte zu koppeln,
**dadurch gekennzeichnet, dass**
mindestens ein Kopplungsmittel (18) an einem bezüglich des Grundkörpers (12) zwischen einer eingeklappten Stellung und einer ausgeklappten Stellung um eine Schwenkachse (S) verschwenkbaren Schwenkkörper (20) ausgebildet ist.

2. Montagehilfe (10) nach Anspruch 1,
**dadurch gekennzeichnet, dass**
durch den Grundkörper (12) eine Erstreckungsebene (E) verläuft und der Schwenkkörper (20) sich in seiner eingeklappten Stellung in der Erstreckungsebene (E) des Grundkörpers (12) erstreckt und in seiner ausgeklappten Stellung zumindest annähernd rechtwinklig zur Erstreckungsebene (E) des Grundkörpers (12) ausgerichtet ist.

3. Montagehilfe (10) nach Anspruch 1 oder 2,
**dadurch gekennzeichnet, dass**
durch den Grundkörper (12) eine Erstreckungsebene (E) verläuft und der Schwenkkörper (20) die beiden Kopplungsmittel (18a, 18b) aufweist, welche jeweils an gegenüberliegenden Endabschnitten des Schwenkkörpers (20) ausgebildet sind und welche sich in der ausgeklappten Stellung des Schwenkkörpers (20) auf gegenüberliegenden Seiten der Erstreckungsebene (E) des Grundkörpers (12) von der Erstreckungsebene (E) wegerstrecken.

4. Montagehilfe (10) nach zumindest einem der vorstehenden Ansprüche, **dadurch gekennzeichnet, dass**
der Grundkörper (12) mindestens eine Aufnahme (26) aufweist, welche in der eingeklappten Stellung des Schwenkkörpers (20) mindestens ein an dem Schwenkkörper (20) ausgebildetes Kopplungsmittel (18) formund/oder kraftschlüssig aufnimmt.

5. Montagehilfe (10) zur lagerichtigen Montage von mindestens drei unterschiedlich ausgebildeten elektrischen Installationsgeräten, umfassend einen Grundkörper (12), eine Neigungswinkelanzeige (16) und mindestens drei verschiedene Kopplungsmittel (18), welche jeweils dazu ausgebildet sind, die Montagehilfe (10) mit einem der mindestens drei elektrischen Installationsgeräte zu koppeln,
**gekennzeichnet durch**
ein an dem Grundkörper (12) ausgebildetes und mittig zu dem Grundkörper angeordnetes Drehmittel (36), welches in Form eines Knaufs zum händischen Verdrehen der Montagehilfe oder für ein Werkzeug ausgebildet ist und welches eine Drehachse (D) definiert, um welche die Montagehilfe (10) drehbar ist, wobei die Drehachse (D) zumindest annähernd rechtwinklig zu einer durch den Grundkörper (12) verlaufenden Erstreckungsebene (E) ausgerichtet ist.

6. Montagehilfe (10) nach zumindest einem der vorstehenden Ansprüche, **dadurch gekennzeichnet, dass**
ein Kopplungsmittel (18a) zumindest Teile eines Steckers nachbildet und dazu ausgebildet ist, die Montagehilfe (10) mit einer Steckdose zu koppeln.

7. Montagehilfe (10) nach zumindest einem der vorstehenden Ansprüche, **dadurch gekennzeichnet, dass**
ein Kopplungsmittel (18b) dazu ausgebildet ist, die Montagehilfe (10) mit einem Schaltereinsatz zu koppeln, insbesondere wobei das Kopplungsmittel (18b) einen Halteclips (28) einer Schalterblende nachbildet.

8. Montagehilfe (10) nach zumindest einem der vorstehenden Ansprüche, **dadurch gekennzeichnet, dass**
ein Kopplungsmittel (18c) an dem Grundkörper (12) ausgebildet ist, welches dazu dient, die Montagehilfe (10) mit einer verdrehbaren Geräte-Verbindungsdose oder einem verdrehbaren Ringeinsatz (30) der Geräte-Verbindungsdose zu koppeln.

9. Montagehilfe (10) nach Anspruch 8,
**dadurch gekennzeichnet, dass**
das Kopplungsmittel (18c) durch zwei an dem Grundkörper (12) diametral gegenüberliegend angeordnete Aussparungen (32) gebildet ist, welche dazu dienen, im gekoppelten Zustand der Montagehilfe (10) jeweils ein Befestigungsmittel (34) zur Befestigung der Geräte-Verbindungsdose oder des Ringeinsatzes (30) der Geräte-Verbindungsdose aufzunehmen.

10. Montagehilfe (10) nach zumindest einem der Ansprüche 1 bis 4 und 6 bis 9, **gekennzeichnet durch**
ein mittig zu dem Grundkörper angeordnetes Drehmittel (36), welches eine Drehachse (D) definiert, um welche die Montagehilfe (10) drehbar ist, wobei das Drehmittel (36) an dem Schwenkkörper (20) ausgebildet und die Drehachse (D) in der eingeklappten Stellung des Schwenkkörpers (20) zumindest annähernd rechtwinklig zu einer durch den Grundkörper (12) verlaufenden Erstreckungsebene (E) ausgerichtet ist.

11. Montagehilfe (10) nach zumindest einem der Ansprüche 8 bis 10,
**dadurch gekennzeichnet, dass**
der Grundkörper (12) zwei Stützabschnitte (38) aufweist, welche im gekoppelten Zustand der Montagehilfe (10) zur Anlage an einer Innenfläche (40) der Geräte-Verbindungsdose oder des Ringeinsatzes (30) dienen.

12. Montagehilfe (10) nach zumindest einem der vorstehenden Ansprüche,
**dadurch gekennzeichnet, dass**
die Neigungswinkelanzeige (16) an dem Grundkörper (12) festgeclipst ist.

13. Montagehilfe (10) nach zumindest einem der vorstehenden Ansprüche,
**dadurch gekennzeichnet, dass**
die Neigungswinkelanzeige (16) eine Wasserwaage, ein Senklot oder ein Inklinometer ist.

14. Verfahren zur lagerichtigen Montage von mindestens zwei unterschiedlich ausgebildeten elektrischen Installationsgeräten mit einer Montagehilfe (10) nach zumindest einem der vorstehenden Ansprüche, die folgenden Schritte umfassend:
- Bereitstellen der Montagehilfe (10);
- Koppeln der Montagehilfe (10) mit einem elektrischen Installationsgerät mittels eines passenden Kopplungsmittels (18);
- korrektes Ausrichten des elektrischen Installationsgeräts mittels der Neigungswinkelanzeige (16);
- Fixieren des elektrischen Installationsgeräts; und
- Entkoppeln der Montagehilfe (10) von dem ausgerichteten und fixierten elektrischen Installationsgerät.

## Claims

1. An assembly aid (10) for the positionally correct assembly of at least two differently configured electrical installation devices, said assembly aid comprising a base body (12), an inclination angle indicator (16) and at least two different coupling means (18) which are each configured to couple the assembly aid (10) to one of the at least two electrical installation devices, **characterized in that**
at least one coupling means (18) is formed at a pivot body (20) which is pivotable about a pivot axis (S) with respect to the base body (12) between a folded-in position and a folded-out position.

2. An assembly aid (10) according to claim 1,
**characterized in that**
a plane of extent (E) extends through the base body (12) and the pivot body (20) extends in the plane of extent (E) of the base body (12) in its folded-in position and is oriented at least approximately at a right angle to the plane of extent (E) of the base body (12) in its folded-out position.

3. An assembly aid (10) according to claim 1 or 2,
**characterized in that**
a plane of extent (E) extends through the base body (12) and the pivot body (20) has the two coupling means (18a, 18b) which are each formed at oppositely disposed end sections of the pivot body (20) and which, in the folded-out position of the pivot body (20), extend away from the plane of extent (E) on oppositely disposed sides of the plane of extent (E) of the base body (12).

4. An assembly aid (10) according to at least one of the preceding claims, **characterized in that**
the base body (12) has at least one receptacle (26) which, in the folded-in position of the pivot body (20), receives at least one coupling means (18), which is formed at the pivot body (20), in a force-fitting and/or force-fitting manner.

5. An assembly aid (10) for the positionally correct assembly of at least three differently configured electrical installation devices, said assembly aid comprising a base body (12), an inclination angle indicator (16) and at least three different coupling means (18) which are each configured to couple the assembly aid (10) to one of the at least three electrical installation devices, **characterized by**
a rotating means (36) which is formed at the base body (12) and arranged centrally with respect to the base body, which is designed in the form of a knob for manually rotating the assembly aid or for a tool and which defines an axis of rotation (D) about which the assembly aid (10) can rotate, wherein the axis of rotation (D) is oriented at least approximately at a right angle to a plane of extent (E) extending through the base body (12).

6. An assembly aid (10) according to at least one of the preceding claims, **characterized in that**
a coupling means (18a) replicates at least parts of a plug and is configured to couple the assembly aid (10) to a socket.

7. An assembly aid (10) according to at least one of the preceding claims, **characterized in that**
a coupling means (18b) is configured to couple the assembly aid (10) to a switch insert, in particular with the coupling means (18b) replicating a retaining clip (28) of a switch cover.

8. An assembly aid (10) according to at least one of the preceding claims, **characterized in that**
a coupling means (18c) is formed at the base body (12) and serves to couple the assembly aid (10) to a rotatable device junction box or a rotatable ring insert (30) of the device junction box.

9. An assembly aid (10) according to claim 8,
**characterized in that**
the coupling means (18c) is formed by two recesses (32) which are arranged diametrically opposite one another at the base body (12) and which serve, in the coupled state of the assembly aid (10), to each receive a fastening means (34) for fastening the device junction box or the ring insert (30) of the device junction box.

10. An assembly aid (10) according to at least one of the claims 1 to 4 and 6 to 9,
**characterized by**
a rotating means (36) which is arranged centrally with respect to the base body and which defines an axis of rotation (D) about which the assembly aid (10) can rotate, wherein
the rotating means (36) is formed at the pivot body (20) and the axis of rotation (D) is oriented, in the folded-in position of the pivot body (20), at least approximately at a right angle to a plane of extent (E) extending through the base body (12).

11. An assembly aid (10) according to at least one of the claims 8 to 10, **characterized in that**
the base body (12) has two support sections (38) which, in the coupled state of the assembly aid (10), serve to contact an inner surface (40) of the device junction box or the ring insert (30).

12. An assembly aid (10) according to at least one of the preceding claims, **characterized in that**
the inclination angle indicator (16) is fixedly clipped to the base body (12).

13. An assembly aid (10) according to at least one of the preceding claims, **characterized in that**
the inclination angle indicator (16) is a spirit level, a plumb bob or an inclinometer.

14. A method for the positionally correct assembly of at least two differently configured electrical installation devices using an assembly aid (10) according to at least one of the preceding claims, comprising:
- providing the assembly aid (10);
- coupling the assembly aid (10) to an electrical installation device by means of a suitable coupling means (18);
- correctly aligning the electrical installation device using the inclination angle indicator (16);
- securing the electrical installation device; and
- decoupling the assembly aid (10) from the aligned and secured electrical installation device.

## Revendications

1. Dispositif d'aide au montage (10) destiné au montage dans la bonne position d'au moins deux appareils d'installation électrique de réalisation différente, comprenant un corps de base (12), un indicateur d'angle d'inclinaison (16) et au moins deux moyens de couplage (18) différents qui sont chacun réalisés pour coupler le dispositif d'aide au montage (10) à l'un desdits au moins deux appareils d'installation électrique,
**caractérisé en ce que**
au moins un moyen de couplage (18) est réalisé sur un corps pivotant (20) pouvant pivoter, par rapport au corps de base (12), autour d'un axe de pivotement (S) entre une position repliée et une position déployée.

2. Dispositif d'aide au montage (10) selon la revendication 1,
**caractérisé en ce que**
un plan d'extension (E) traverse le corps de base (12), et le corps pivotant (20), dans sa position repliée, s'étend dans le plan d'extension (E) du corps de base (12) et, dans sa position déployée, est orienté au moins approximativement perpendiculairement au plan d'extension (E) du corps de base (12).

3. Dispositif d'aide au montage (10) selon la revendication 1 ou 2,
**caractérisé en ce que**
un plan d'extension (E) traverse le corps de base (12), et le corps pivotant (20) présente les deux moyens de couplage (18a, 18b), qui sont réalisés respectivement sur des parties d'extrémité opposées du corps pivotant (20) et qui, dans la position déployée du corps pivotant (20), s'étendent sur des côtés opposés du plan d'extension (E) du corps de base (12), en s'éloignant dudit plan d'extension (E).

4. Dispositif d'aide au montage (10) selon l'une au moins des revendications précédentes,
**caractérisé en ce que**
le corps de base (12) présente au moins un logement (26) qui, lorsque le corps pivotant (20) est en position repliée, reçoit par complémentarité de forme et/ou par adhérence au moins un moyen de couplage (18) réalisé sur le corps pivotant (20).

5. Dispositif d'aide au montage (10) destiné au montage dans la bonne position d'au moins trois appareils d'installation électrique de réalisation différente, comprenant un corps de base (12), un indicateur d'angle d'inclinaison (16) et au moins trois moyens de couplage (18) différents, qui sont chacun réalisés pour coupler le dispositif d'aide au montage (10) à l'un desdits au moins trois appareils d'installation électrique,
**caractérisé par**
un moyen de rotation (36) réalisé sur le corps de base (12) et agencé au centre du corps de base, qui se présente sous la forme d'un bouton réalisé pour faire tourner manuellement le dispositif d'aide au montage ou pour un outil, et qui définit un axe de rotation (D) autour duquel le dispositif d'aide au montage (10) peut tourner, l'axe de rotation (D) étant orienté au moins approximativement perpendiculairement à un plan d'extension (E) passant par le corps de base (12).

6. Dispositif d'aide au montage (10) selon au moins l'une des revendications précédentes,
**caractérisé en ce que**
un moyen de couplage (18a) reproduit au moins certaines parties d'une fiche et est réalisé pour coupler le dispositif d'aide au montage (10) à une prise.

7. Dispositif d'aide au montage (10) selon l'une au moins des revendications précédentes,
**caractérisé en ce que**
un moyen de couplage (18b) est réalisé pour coupler le dispositif d'aide au montage (10) à un insert d'interrupteur, le moyen de couplage (18b) reproduisant notamment un clip de retenue (28) d'un cache d'interrupteur.

8. Dispositif d'aide au montage (10) selon l'une au moins des revendications précédentes,
**caractérisé en ce que**
un moyen de couplage (18c) est réalisé sur le corps de base (12), lequel sert à coupler le dispositif d'aide au montage (10) à une boîte de jonction d'appareils rotative ou à un insert annulaire rotatif (30) de la boîte de jonction d'appareils.

9. Dispositif d'aide au montage (10) selon la revendication 8,
**caractérisé en ce que**
le moyen de couplage (18c) est constitué de deux évidements (32) agencés de manière diamétralement opposée sur le corps de base (12), qui servent, lorsque le dispositif d'aide au montage (10) est couplé, à recevoir chacun un moyen de fixation (34) destiné à fixer la boîte de jonction d'appareils ou l'insert annulaire (30) de la boîte de jonction d'appareils.

10. Dispositif d'aide au montage (10) selon l'une au moins des revendications 1 à 4 et 6 à 9,
**caractérisé par**
un moyen de rotation (36) agencé au centre du corps de base, qui définit un axe de rotation (D) autour duquel le dispositif d'aide au montage (10) peut tourner, le moyen de rotation (36) étant réalisé sur le corps pivotant (20) et l'axe de rotation (D) étant orienté, dans la position repliée du corps pivotant (20), au moins approximativement perpendiculairement à un plan d'extension (E) passant par le corps de base (12).

11. Dispositif d'aide au montage (10) selon l'une au moins des revendications 8 à 10,
**caractérisé en ce que**
le corps de base (12) présente deux parties d'appui (38) qui, lorsque le dispositif d'aide au montage (10) est couplé, servent à venir en appui contre une surface intérieure (40) de la boîte de jonction d'appareils ou de l'insert annulaire (30).

12. Dispositif d'aide au montage (10) selon l'une au moins des revendications précédentes,
**caractérisé en ce que**
l'indicateur d'angle d'inclinaison (16) est clipsé fermement sur le corps de base (12).

13. Dispositif d'aide au montage (10) selon l'une au moins des revendications précédentes,
**caractérisé en ce que**
l'indicateur d'angle d'inclinaison (16) est un niveau à bulle, un fil à plomb ou un inclinomètre.

14. Procédé de montage dans la bonne position d'au moins deux appareils d'installation électrique de réalisation différente à l'aide d'un dispositif d'aide au montage (10) selon l'une au moins des revendications précédentes, comprenant les étapes consistant à :
- fournir le dispositif d'aide au montage (10) ;
- coupler le dispositif d'aide au montage (10) à un appareil d'installation électrique à l'aide d'un moyen de couplage (18) adapté ;
- orienter correctement l'appareil d'installation électrique à l'aide de l'indicateur d'angle d'inclinaison (16) ;
- fixer l'appareil d'installation électrique ; et
- découpler le dispositif d'aide au montage (10) de l'appareil d'installation électrique orienté et fixé.
